(19) Europäisches Patentamt
European Patent Office
Office européen des brevets

(11) **EP 3 203 658 B1**

(12) **EUROPEAN PATENT SPECIFICATION**

(45) Date of publication and mention
of the grant of the patent:
**24.10.2018 Bulletin 2018/43**

(51) Int Cl.:
***H04B 10/116*** *(2013.01)*

(21) Application number: **17153119.7**

(22) Date of filing: **25.01.2017**

(54) **A CODED LIGHT TRANSMITTER, RECEIVER, TRANSMITTING METHOD AND RECEIVING METHOD**

CODIERTER LICHTSENDER, EMPFÄNGER, SENDEVERFAHREN UND EMPFANGSVERFAHREN

ÉMETTEUR DE LUMIÈRE CODÉE, RÉCEPTEUR, PROCÉDÉ DE TRANSMISSION ET PROCÉDÉ DE RÉCEPTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.02.2016 PCT/CN2016/073526**
**12.04.2016 EP 16164800**

(43) Date of publication of application:
**09.08.2017 Bulletin 2017/32**

(73) Proprietor: **Philips Lighting Holding B.V.**
**5656 AE Eindhoven (NL)**

(72) Inventors:
• **LIU, Junhu**
**5656 AE Eindhoven (NL)**
• **SHI, Liang**
**5656 AE Eindhoven (NL)**
• **FU, Jie**
**5656 AE Eindhoven (NL)**
• **SUN, Xiao**
**5656 AE Eindhoven (NL)**

(74) Representative: **Verweij, Petronella Daniëlle et al**
**Philips Lighting B.V.**
**Philips Lighting Intellectual Property**
**High Tech Campus 45**
**5656 AE Eindhoven (NL)**

(56) References cited:
EP-A1- 2 924 895          US-A1- 2013 016 965
US-A1- 2015 016 825

• ZHAO SHUZE ET AL: "Burst-Mode Resonant LLC Converter for an LED Luminaire With Integrated Visible Light Communication for Smart Buildings", IEEE TRANSACTIONS ON POWER ELECTRONICS, INSTITUTE OF ELECTRICAL AND ELECTRONICS ENGINEERS, USA, vol. 29, no. 8, 1 August 2014 (2014-08-01) , pages 4392-4402, XP011544097, ISSN: 0885-8993, DOI: 10.1109/TPEL.2013.2286104 [retrieved on 2014-03-26]
• SHUZE ZHAO ET AL: "A dimmable LED driver for visible light communication (VLC) based on LLC resonant DC-DC converter operating in burst mode", APPLIED POWER ELECTRONICS CONFERENCE AND EXPOSITION (APEC), 2013 TWENTY-EIGHTH ANNUAL IEEE, IEEE, 17 March 2013 (2013-03-17), pages 2144-2150, XP032410627, DOI: 10.1109/APEC.2013.6520592 ISBN: 978-1-4673-4354-1

**Description**

FIELD OF THE INVENTION

This invention relates to the use of coded light, by which data is modulated onto a light output, for reception by optical to electrical conversion.

BACKGROUND OF THE INVENTION

The use of solid state lighting, in particular LED lighting, is now standard in many different application areas, having replaced traditional incandescent lighting. Solid state lighting offers efficiency savings, color control, and the ability to alter the light output at high frequencies to provide dynamic lighting effects.

The ability to control LED lighting in this dynamic way has also opened up other applications beyond simple lighting. One such emerging application is so-called Coded Light Communication. In principle, this technology utilizes the LED output to provide a data communication channel. LED light sources are easy to control, with the ability to turn on and off the light output at nanosecond timings. The visual retention implemented by the human eye makes these lighting changes imperceptible, for example when carried out at a frequency of around 200Hz or more. Thus, LED lighting can be used for communication and for illumination simultaneously, by providing a general light output level, and providing additional high frequency (short duration) modulation bits to convey a digital signal to a receiver, so that digital communication is realized.

For example, a light output during a bit period can represent a digital 1 and no light output during a bit period can represent a digital 0. In this way, LED light can transmit an encoded digital signal. There are many applications for such data transmission. There can be intensive data exchange, and such an approach has come to be known as "LiFi". Alternatively, there can be more modest data transfer, for example for conveying packets of interesting data, position location, and other useful information. Thus, the coded light system could for example be used to broadcast music, or location information, or other location specific information.

The flashing of the light output to encode binary information is one approach. In practice, a more sophisticated approach can be used. Instead of fully turning on and off the LED light output for signal transmission, partial modulation (i.e. using an offset to a carrier level rather than fully turning on and off the light source) may be used so that there is less fluctuation in the light output. More specifically, a strong light during a bit period can represent a digital 1 and a weak light during a bit period can present a digital 0. Furthermore, to ensure that the encoded data does not alter the average light output level in a way which depends on the data content, Manchester coding (or other approaches) may be used.

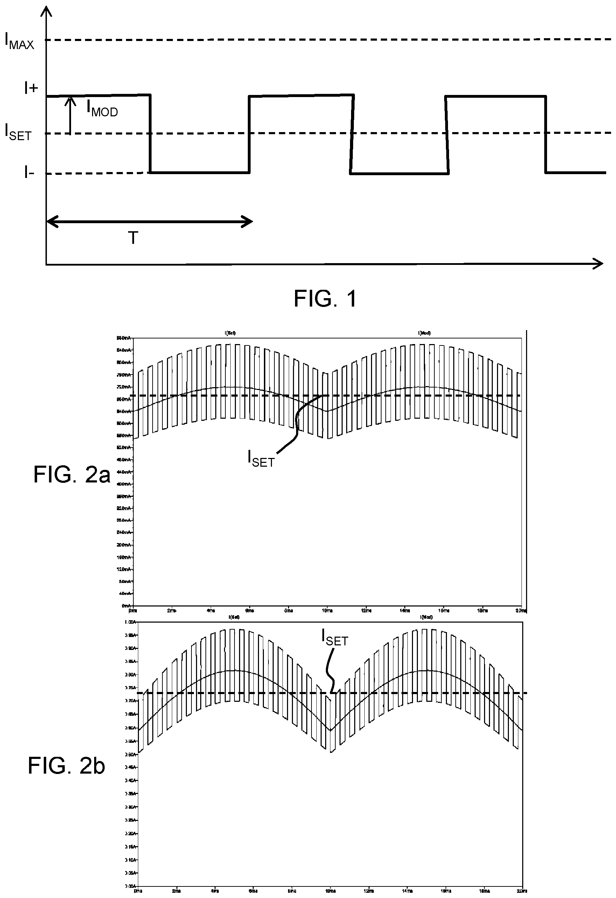

Figure 1 shows a partial modulation scheme. It shows the LED current versus time. The LED light output can be assumed to be proportional to the LED current.

There is a base current level $I_{SET}$ which corresponds to the low frequency or DC desired light output level. This functions as a modulation carrier signal. A modulation signal of depth $I_{MOD}$ above and below the carrier level $I_{SET}$ is used to modulate data, with a period of T. This gives a lower valley current level I- and a higher peak current level I+, wherein:

$$I\text{-} \leq I_{SET} \leq I\text{+} \qquad\qquad Eq.1$$

The general current level $I_{SET}$ needs to be stable to ensure the receiver can detect the lumen changes and interpret the encoded digital signal correctly. For a dual stage LED lighting driver, the current output from the dual stage driver will be relatively stable so that the current level $I_{SET}$ is constant or has much lower variation frequency than the coded light signal (for example varying when dimming changes are made).

However, for a single stage LED driver there are large 100Hz (or 120Hz for a 60Hz mains) ripple currents due to the AC mains sine wave ripple.

Figure 2a shows a dual stage current waveform and Figure 2b shows a single stage current waveform. The ripple follows a rectified sine wave. For the dual stage driver, the average current level $I_{SET}$ used as the decision current lies comfortably between the peaks and valleys of the modulated signal. However, as shown Figure 2b, for the single stage driver, the average current level $I_{SET}$ may be higher than a modulated positive pulse 1+ when the ripple is at its lowest. Figure 2b thus shows that the modulation depth used is at the limit of (or indeed just beyond) what can be detected. Similarly, the average current level $I_{SET}$ may be lower than a modulated negative pulse I- when the ripple is at its highest. This would arise for a slightly smaller modulation depth than that shown in Figure 2b. US20130016965A1 discloses using the average current as the decision threshold.

This means it is no longer possible to decode the modulated data when the modulation depth shown is applied. In particular, the maximum negative modulation signal I- is too close to the minimum positive modulation signal I+. A margin is also needed between them so that a guard band can be provided each side of the decision level ($I_{SET}$).

US20130016965A1 also proposes using preambles to indicate a burst transimission, the mid-logic level of the preamble is used as the decision threshold for the rest transmission.

Patent document US2015/0016825 discloses an electronic circuit for visible light communications, wherein the transmission takes place in the form of frames that can be seen as defining transmission windows with a starting part ("SOF") and with an end part (including a Cyclic Redundancy Check).

SUMMARY OF THE INVENTION

There remains a problem that for LED drivers which include a significant ripple in their output current waveform, the implementation of a coded light system is difficult if a low modulation depth is desired.

A basic idea of embodiments of the invention is dividing the whole cycle of the rippled current into a plurality of windows, wherein in each window the decision current falls between the peaks and valleys of the modulated signal and in turn the decision current may be different for different windows. The transmitter transmits a start signal to indicate the start of a window and an end signal (possibly re-used as the start signal of a next window) to indicate the end of the window. The receiver can detect each window by detecting the start and the end of the window, and the detection is carried out with respect to each window.

The invention is defined by the claims.

According to examples in accordance with an aspect of the invention, there is provided an electronic circuit for modulating information onto a current waveform which is for driving a light emitting element, said current waveform varying over time before any modulation is applied, the circuit comprising:

a first unit for providing to the current waveform a first current signal indicating a start of a transmission window, and a second current signal indicating an end of said transmission window; and
a modulator for modulating data onto the current waveform during the transmission window, by sequentially adding an offset to the current waveform to create a peak value and/or subtracting an offset from the current waveform to create a valley value,
wherein said modulator is adapted to set the offset such that each peak value during said transmission window exceeds an average current in the transmission window and each valley value during said transmission window is below the average current.

In this circuit, a transmission window is identified for which the peaks and valleys of the modulated current waveform data are always above and below (respectively) an average current value within the window. This average current is thus used as a decision level. The decision current may be the average current over the whole time of the transmission window, or it may be an average current at a smaller portion of the transmission window, or it may be an instantaneous current level. For example it may be the current level of the first current signal (which may also be considered to be the average current at the start of the transmission window).

The peaks and valleys may for example be above and below the average value by at least a guard level, so that each peak can always be identified as a logical high and each valley can be identified as a logical low, based on a decision level set to be a decision current level. In this way, a coded light output can be generated in which the overall current varies significantly, for example by as much or more than the modulation depth (i.e. the offset size). By selecting sequential time periods for transmission of data, these overall current variations may be tolerated, because the decision level is flexible over the period of variation of the current waveform and can be adapted in the receiver, based on the average received signal at the start of, or throughout each window. In this way lower cost driver architectures may be used. There may be only one window during each period of variation of the current waveform (before modulation), in which case there is only one decision level (threshold) needed at the receiver, for example the overall average current value for the entire transmission time. Alternatively, there may be multiple transmission windows within the period of variation of the current waveform (before modulation) so that the transmission time may be maximized. The first and second current signals may be the same type of signal - for example indicating the end of one window and the start of a next window.

The first and second current signals may comprise signals with a different frequency to a modulation frequency or a pulse with a different duration to a pulse duration of the modulation data.

The use of a different frequency or a different single pulse duration enables the start and end of the data transmission window to be signaled to the receiver device which will ultimately decode the coded light signal. The different frequency or pulse duration may remain during data transfer, for example so that the first current signal is a change from a first frequency to a second frequency, and the second current signal is a change back from the second frequency to the first frequency. Any suitable signal change may be used which can be decoded so as to identify a time period during which data transmission takes place.

The first current signal may for example be further adapted to indicate the end of a previous window, and the second current signal may be further adapted to indicate the start of a next window. Thus, there may be windows arranged time sequentially, and the overhead of the signaling of the start and end of each window is decreased.

The circuit preferably comprises a processor for determining a number of bits of information to be modulated onto the current waveform during the transmission window.

In this way, the data modulating circuit modulates an amount of data which can fit into the time of the transmission window, thus the length of each transmission window can be determined intelligently.

There are various ways in which the processor can determine the number of bits to transmit during a particular window.

In a first approach, the processor is adapted to determine the number of bits and in turn the length of the transmission window according to a pre-stored window location in each cycle of the current waveform. In the first approach, there are preset window locations within the period of variation of the current waveform. This is a static approach. In this approach, the pre-stored window location can be calculated during product testing based on the standard input mains. For example, the window length in each mains cycle may be stored as sections such as phases $0-\pi/4$, $\pi/4$- $3\pi/4$, $3\pi/4$- $\pi$, or alternatively as voltage ranges of OV to Vm*0.707, Vm*0.707 to Vm*0.707, and Vm*0.707 to 0, wherein Vm is the peak amplitude of the sinusoidal mains voltage. The cost of pre-storing data is quite low thus the total cost for this approach is low.

In a second approach, the processor is adapted to determine the number of bits and in turn the length of the transmission window according to the variation rate of the current waveform per bit and the size of the offset (i.e. modulation depth). In the second approach, the dynamic way the current waveform varies is monitored, and by taking account of the modulation depth (the offset), the length of the transmission window can be determined.

In a third approach, the processor is adapted to determine the number of bits and in turn the length of the transmission window according to a real-time detected value of the current waveform at any particular instant within said window and the average current. In this third approach, an on-going comparison is made between the current waveform and the average current. This approach can determine when the average current stops being effective as a decision threshold by detecting that the average current has fallen out of the peak/valley range of modulation in that window. The present window can then be stopped and a new window can be started. More specifically, the processor may be adapted to determine the end of the transmission window if a real-time detected value of the current waveform at a particular instant plus or minus the offset, has reached the decision current. As discussed above, this decision current may be the long term average current in said window or just the instant current value at the start of the window.

For example, this means that when the decision current is exceeded by a modulation with a negative offset, or the decision current is greater than a modulation with a positive offset, the transmission window needs to end, because the use of the decision current as a threshold level is no longer suitable.

The circuit may comprise a modulation resistor for connection in series with the light emitting element, and a shorting switch in parallel with the modulation resistor for selectively shorting the modulation resistor thereby modulating the current waveform.

This provides a simple way to provide a coded light output, based on modulation of the output load driven by a lighting driver.

The invention also provides a lighting unit for emitting light modulated with data, comprising:

a light emitting element comprising one or more LEDs; and
a circuit as defined above for modulating data onto an LED drive current based on a coded light input signal, thereby providing a coded light output.

This lighting unit incorporates the modulation circuitry as defined above.

The invention also provides an LED driver comprising
a single stage LED driver architecture; and
a circuit as defined above for modulating data onto the LED drive current thereby providing a coded light output.

In this example, the modulation circuitry is integrated into a low cost single stage LED driver.

The invention also provides a lighting system comprising:

a light emitting element comprising one or more LEDs;
a single stage LED driver; and
a circuit as defined above for modulating data onto the LED drive current thereby providing a coded light output.

In this lighting system, the circuit may be part of the driver, or part of the lighting element, or a separate element.

Examples in accordance with another aspect of the invention provide an electronic circuit for receiving data modulated onto a coded light signal, comprising:

a light receiving element for converting a light input into a current signal having a waveform which varies over time;
a detecting circuit for detecting a first current signal indicating a start of a transmission window, and a second current signal indicating an end of said transmission window; and
a demodulator for detecting data modulated onto the current waveform during the transmission window, said demodulator is adapted to:

detecting an instant value of the current waveform;
calculating an average value of the current waveform in the transmission window; and
determining a peak value if the instant value is larger than the average value and determining a valley value if the instant value is smaller than the average value,
determining the data according to the determined peak values and valley values.

This aspect provides a demodulating circuit for demodulating the data transmitted as a coded light signal by the modulating circuit defined above. It detects when a transmission window starts and finishes, and demodulates data during the transmission window. It may determine a decision level based on a decision current detected in the transmission window, for example at the start of the transmission window or else the decision current may be based on an average value, for example over the entire transmission window.

The first and second current signals may comprise signals with a different frequency to a modulation frequency or a pulse with a different duration to a pulse duration of the modulation data.

Examples in accordance with another aspect of the invention provide a method of modulating information onto a current waveform which is for driving a light emitting element, said current waveform varying over time before any modulation is applied, the method comprising:

providing to the current waveform a first current signal indicating a start of a transmission window, and a second current signal indicating an end of said transmission window; and
modulating data onto the current waveform during the transmission window, by sequentially adding an offset to the current waveform to create a peak value or subtracting an offset from the current waveform to create a valley value, wherein said step of modulation comprising setting the offet such that each peak value during said transmission window exceeds an average current in the transmission window and each valley value during said transmission window is below the average current.

The method may comprise generating the first and second current signals by providing a different frequency to a modulation frequency, or by providing a pulse with a different duration to a pulse duration of the modulation data.

Modulating data may be carried out by selectively shorting a modulation resistor which is in series with the light emitting element, thereby modulating the current waveform.

The method may further comprise determining a number of bits of information to be modulated onto the current waveform during the transmission window. In a first approach, the number of bits and in turn the length of the transmission window may be determined according to a pre-stored window location in each cycle of the current waveform. In a second approach, the number of bits and in turn the length of the transmission window may be determined according to the variation rate of the current waveform per bit and the size of the offset. In a third approach, the number of bits and in turn the length of the transmission window may be determined according to a real-time detected value of the current waveform at a particular instant and the decision current, which may be the average current from the start of the said transmission window to said particular instant.

Examples in accordance with another aspect of the invention provide a method for receiving data modulated onto a coded light signal, comprising:

converting a light input into a current signal having a waveform which varies over time;
detecting a first current signal indicating a start of a transmission window, and a second current signal indicating an end of said transmission window; and
detecting data modulated onto the current waveform during the transmission window, comprising:

detecting an instant value of the current waveform;
calculating an average value of the current waveform in the transmission window; and
determining a peak value if the instant value is larger than the average value and determining a valley value if the instant value is smaller than the average value,

determining the data according to the determined peak values and valley values.

This aspect provides a method of receiving and decoding the modulated data providing by the modulating circuit and method. The decision current may be determined by the receiver from the first current signal so that it may be based on an instantaneous value or an average of only a portion of the transmission window such as the average current at the start of the window, or it may be determined by the receiver from the full transmission window as it proceeds over time in a real-time dynamic manner.

Detecting the first and second current signals may comprise detecting signals with a different frequency to a modulation frequency or detecting a pulse with a different duration to a pulse duration of the modulation data.

These and other aspects of the invention will be apparent from and elucidated with reference to the embodiment(s) described hereinafter.

BRIEF DESCRIPTION OF THE DRAWINGS

Examples of the invention will now be described in detail with reference to the accompanying drawings, in which:

Figure 1 shows a partial modulation scheme;
Figure 2a shows a dual stage current waveform and Figure 2b shows a single stage current waveform;
Figure 3 shows a source-synchronized signal transmission principle;
Figure 4 shows a source-synchronized signal transmission system;
Figure 5 shows a relationship between forward current (y-axis) and the voltage (x-axis) across each LED in a series string;
Figure 6 shows a synchronization signal a first period of synchronization and a second period for data transfer; and
Figure 7 shows a demodulating circuit.

DETAILED DESCRIPTION OF THE EMBODIMENTS

The invention provides a coded light transmission and reception circuit and transmission and reception methods which use signals to indicate the start and end of a coded light transmission window. Data is modulated onto the current waveform during the transmission window. Each data peak value during said transmission window exceeds a decision current in the transmission window (which is used as the decision level) and each valley value during said transmission window is below the decision current. In this way, a coded light output can be generated in which the overall decision current varies significantly, but the coded light signal can still be decoded reliably. The decision level can be adapted in the receiver.

The invention provides synchronization of a receiver with the signal transmitter by using a transmission start indicator signal before communication. In this way, the decision level for demodulation can be be made to vary over time and the ripple current can be tolerated. The coded light system will still function even if the equation Eq. 1 above is not met for a full time cycle, but met for each transmission window within the full time cycle. In this way, a low-cost, compact single stage LED driver can also be used.

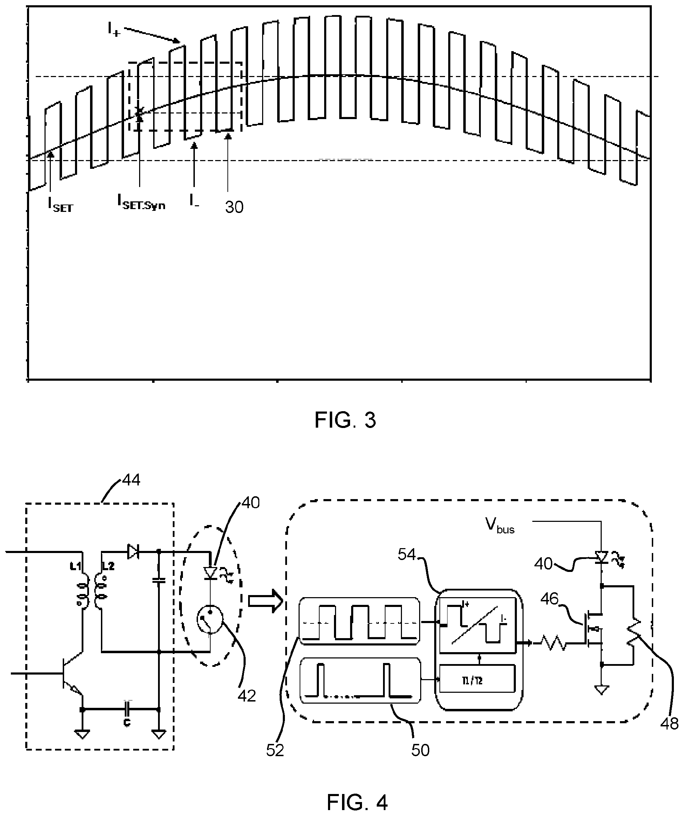

Figure 3 shows the source synchronized signal transmission principle.

The instantaneous average current is shown as plot $I_{SET}$, and it varies between upper and lower boundaries.

Instead of setting a fixed decision level in the receiver, for example based on the average of current $I_{SET}$ over the full cycle, a dynamic value of the decision current $I_{SET}$ is defined. It is shown as $I_{SET.Syn}$ in Figure 3.

The approach involves setting a transmission time window 30. As will be explained further below, the timing of the transmission window 30 is known to both the transmitter and the receiver. In particular, a first current signal indicates a start of the transmission window 30, and a second current signal indicates an end of the transmission window 30.

A modulator then modulates data onto the current waveform during the transmission window 30, by sequentially adding an offset to the current waveform to create a peak value and/or subtracting an offset from the current waveform to create a valley value, in the manner explained above.

Each peak value during the transmission window 30 exceeds the decision current in the transmission window and each valley value during said transmission window is below the decision current, wherein the decision current can be selected as the average current at the start of the transmission window or the average current throughout the whole transmission window, or any other reference value as desired by the coded light technology/protocol.

In this way, the decision current can be used reliably to distinguish between the peaks and valleys within that window. Each peak value preferably exceeds the decision value by a guard level, and each valley value is below the decision value by a guard level (which may be the same or different). This ensures reliable decision making using the decision level.

By defining time windows which are shorter than the overall current waveform period, a smaller modulation depth can be used giving less variation in light output. This helps to reduce the visible flicker.

In the example of Figure 3, the decision current value $I_{SET.Syn}$ is the average value at the start of the window 30. i.e. the average between the first valley value and the first peak value which occurs within the window 30. Thus, the decision is not an average over the duration of the window but may be considered to be an instantaneous value (or instantaneous average) at the start of the window. There are alternative approaches discussed below.

The window 30 ends before the decision level $I_{SET.Syn}$ may become unreliable. As shown in Figure 3, the next valley value after the window 30 is too close (less than the guard band) to the $I_{SET.Syn}$ value for it to be used as a decision level for detecting the valley value.

The driver knows the ripple or noise level, so it can calculate the suitable duration of the transmission window 30 and can therefore also calculate the number of bits to transmit (at a known bit rate) in each transmission window 30. A detailed solution for deciding the length of the window will be elucidated below.

There may be only one window 30 with each period of the overall current waveform. This means only one decision level is needed. However, it means that time is wasted when no data transmission is used. Thus, multiple transmission windows may be applied in each cycle (100Hz or 120Hz). In this way, large data volume coded light communication is feasible in a ripple current prone single stage LED driver.

Figure 4 shows a source synchronized signal transmission system.

The LED 40 (which in practice comprises one or many strings of LEDs) is in series with a switching circuit 42 for implementing the modulation of the current through the LED. The LED is driven by a single stage driver 44 shown as an isolated flyback converter. The switching circuit 42 modulates a peak current to indicate a digital 1 value and valley current to indicate a digital 0 value.

The switching element 42 comprises a transistor 46 in parallel with a resistor 48. The gate signal applied to the transistor 46 comprises two parts, a synchronize signal 50 and the modulation signal 52. These are applied to the gate by a driver, which includes a processor 54 for determining the number of bits to be provided during each transmission window. In one example, the synchronize signal 50 comprises pulses having a different duration to those applied at other times, and the synchronize signal 50 should have much lower frequency than the modulation signal/data. These can be used as start and/or end signals for indicating the start and/or end of transmission windows. If the windows are time sequential with no time gap, then a single signal may serve as an end indicator for one window as well as a start indicator for the next window. Alternatively, there may be separate start and end signals.

The control of the switch 46 determines if the resistor 48 is in series with the LED or is shorted. In this way, the load is varied and the current through the LED is thereby altered to produce different output lumen. For example, when the switch 46 is fully conducting, the peak current is provided to the LED to emit a peak lumen output, and when the switch 46 is off, a valley current flows through the LED to emit a valley lumen output.

The modulation resistor 48 determines the modulation depth and the resulting output lumen depends on the bus voltage $V_{bus}$ and the characteristics of the LED.

The transmission of data needs to be controlled so that data is only modulated during the transmission windows. For this purpose, the number of bits to be transmitted in each transmission window is determined.

When a transmitter decides to transmit a signal, it sends a first synchronizing signal for indicating the start of the transmission window. As mentioned above, this could be realized by changing the modulated current output frequency or period, for example with the period changed from a first value to a second value.

At the receiving side, the receiver samples the modulated lumen changes containing ripple current components. The receiver can easily sample and detect the period of any particular pulse by measuring the timing of adjacent lumen changes. The period (or frequency) changes are then used as a communication start-up indicator. Thus, before any communication starts, the driver sends the synchronize signal to the receiver, followed by the content bits.

In one example, the average current of the synchronize signal (i.e. the average of the valley and peak of the signal with a different period) at the start of the window is used to define the decision current value. Alternatively, the average current throughout the window until the end of the window can be detected as the decision current value.

The driver calculates how many bits to send in one transmission window. When all required data bits cannot be transmitted in one transmission window, the driver can initiate a subsequent synchronization and transmission window for the remaining data bits.

For signal modulation, the values of $I_{SET}$, $I_{MOD}$, and $M_{drel}$ should be calculated. The parameters $I_{SET}$ and $I_{MOD}$ are defined above. The value $M_{drel}$ is the relative modulation depth and is defined as below:

$$M_{drel} = I_{MOD} / I_{SET} \qquad\qquad \text{Eq. 2}$$

For a given LED lighting module, the number of LEDs in series or parallel is fixed, and the LED characteristics are also fixed. Thus, the $I_{MOD}$ and $M_{drel}$ values can be calculated. The values of $I_{MOD}$ or $M_{drel}$ are critical to determine how many bits can be transmitted in one valid transmission window.

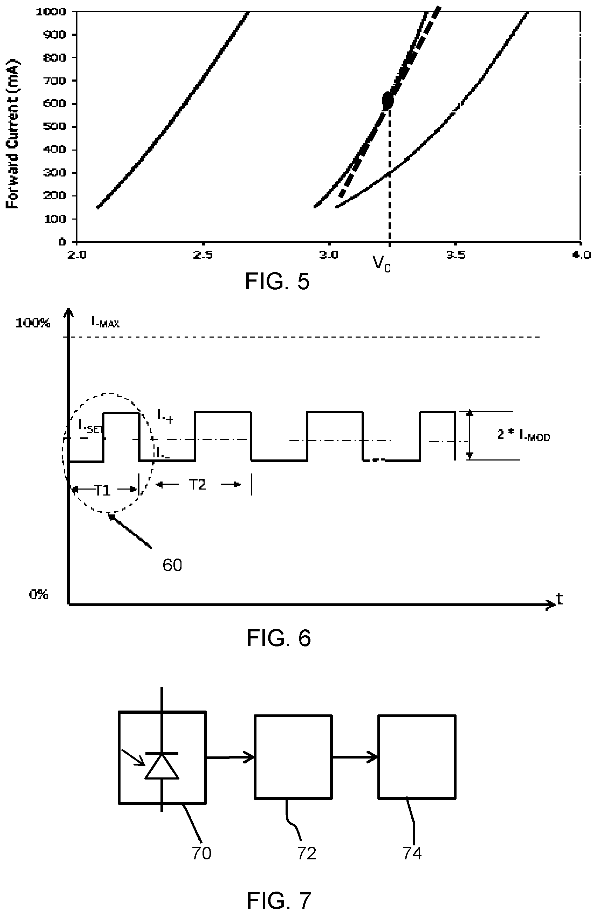

Figure 5 shows a relationship between the LED forward current (y-axis) and the forward voltage (x-axis) across each LED in a series string for three different LED configurations. The three different plots indicate three different LEDs (for example white, red and blue. Different types of LED has different V-I relationships which therefore present a different load impedance to the driver. Thus, the ripple current is also dependent on the LED type.

As shown for the middle plot, a line of best fit can be defined which models the variation of voltage with current for a particular LED type. It means that the voltage change across the string can be determined when the resistor 48 is switched in and out of circuit (the voltage change is the voltage drop across the resistor), and then the current change can be determined through each LED using the line of best fit, which then defines the new operating point.

For the circuit of Figure 4 and based on the relationships shown in Figure 5, the line of best fit can be defined by:

$$I = \frac{V_{bus} - mV0}{mk + R_m} \qquad\qquad \text{Eq. 3}$$

In Eq. 3, I is the current flow through the LED string, $V_{bus}$ is the bus voltage, which has ripple and will result in LED current ripple in a single stage driver. m is the number of LEDs in series connection, $V_0$ is the voltage fitting point for each LED, k is the voltage change rate against current, and the $R_m$ is the modulation resistance.

From equation 3, the following relationships can be obtained:

$$I_{SET} = (V_{bus} - mV_0) * (2mk + R_m) / \{mk*(mk + R_m)\} \qquad\qquad \text{Eq. 4}$$

$$I_{MOD} = (V_{bus} - mV_0) * R_m / \{2* mk*(mk + R_m)\} \qquad\qquad \text{Eq. 5}$$

$$M_{drel} = I_{MOD} / I_{SET} = R_m / (2mk + R_m) \qquad\qquad \text{Eq. 6}$$

The value of $R_m$ will determine the modulation depth and hence $I_{MOD}$. In a given single stage LED driver, the ripple current or the magnitude of the current change is fixed. As a result, the value of $I_{MOD}$ determines how many bits can be transmitted in one transmission window.

For a specific single stage LED driver, the current ripple change from time t; to $t_{i+1}$ is known to the driver, which can be referred to as $\Delta I_{ripple[ti,ti+1]} = I_{SET.t+1} - I_{SET.ti}$.

$I_{SET.t}$ denotes the $I_{SET}$ value at different times.

A theoretical number of bits that can be transmitted in each window can then be defined as:

$$N = INT (I_{MOD} / \Delta I_{ripple}) \qquad\qquad \text{Eq. 7}$$

INT is the integer rounding operation.

$\Delta I_{ripple}$ is the current variation within each modulation period and $I_{MOD}$ is the modulation depth. A larger $I_{MOD}$ means a large modulation depth which enables more bits to be transmitted but deteriorates flicker. Changes in $I_{MOD}$ as well as a time dependency of the value $\Delta I_{ripple}$ in a mains cycle may also be taken into account.

The example above is based on the use of a synchronization signal by which the output period is varied. Figure 6 shows a synchronization signal 60 having period T1 followed by data transmission within the window with period T2. This can be realized by a timer in a master control unit. The timer may be set to value T2 by default, and changes to T1 when it detects a synchronous pulse.

The modulation is performed in conventional manner, by which for a "1" signal, the carrier current $I_{SET}$ is changed to I+; and for a signal "0", the carrier current $I_{SET}$ is changed to I-. Note that the digital values 1 and 0 may be encoded oppositely - the naming of a 1 and a 0 is entirely arbitrary.

For the I+ signal, the modulator output will be a high voltage to drive the switch 46 to close, so the resistor 48 is bypassed, and the current flow through the LED will reach a maximum. For the I- signal, the modulator output will have a low voltage so the switch 46 will turn off, in which case, the current will go through LED string and the resistor 48. For a given bus voltage $V_{bus}$, as the modulation resistor is added into the series connection, the current in the loop will be reduced to I-.

The modulating resistor 48 (resistance $R_m$) works as a modulation depth controller to control the $I_{MOD}$ value and further determine the number of valid bits in one transmission window.

The driver knows the total number of bits which need to be transmitted, and how many bits can be transmitted in each transmission window.

One example is given above of how to signal the start and end of a transmission window, based on a pulse of different duration. The signal may be a sequence of pulses, for example with a different frequency to the modulation frequency. The data modulation may even all be carried out at the new frequency, so that there is a standby frequency and a modulation frequency, and the start signal is a change from the standby frequency to the modulation frequency, and the end signal is a change from the modulation frequency to the standby frequency. A single signal may indicate the end of one window and the start of the next. Indeed, any suitable signal change may be used which can be decoded so as to identify a time period during which data transmission takes place.

One example is given above of how to set the average current level to be used as the decision level at the receiver.

It should be noted that the current level at the receiver is based on the detected current after electrical to optical conversion at the transmitter followed by optical to electrical conversion at the receiver. Thus, the current levels are not the same at the transmitter and at the receiver, but they correspond to each other. By this is meant that a higher current at the receiver lead to a higher current at the transmitter and vice versa.

Figure 7 shows an electronic circuit for receiving data modulated onto a coded light signal. A light receiving element 70 such as a photodiode converts the light input into a current signal having a waveform which varies over time. A detecting circuit 72 detects the first current signal indicating the start of a transmission window, and the second current signal indicating an end of said transmission window. It also determines the decision current to be used as the decision level for demodulating the data. As explained above, detection of the first and second current signals may be based on frequency analysis or pulse duration measurement. The decision current may be determined as the average detected signal during the first current signal, or it may be determined based on the signal received over the duration of the transmission window. A demodulator 74 detects the data modulated onto the current waveform during the transmission window. This makes use of the decision current The instantaneous value of the current waveform is compared with the decision value of the current waveform in the transmission window.

There are also other ways to define the decision current. For example if the average current over the whole window (rather than at the start) can be used, the window may be longer. This may be possible by the receiver determining the decision level at the end of the window and then post processing the received data. This introduces a delay, but it may be fixed, for example at one period of the ripple.

The transmitter may then determine the decision level as the average current level for the transmission window up to a certain point, and the window will end when detection based on that average current stops falling within the required guard bands.

In this case, the average current used as a decision level becomes the average current from the start of the the transmission window to a particular instant.

In this case, post processing may be used if the average value (and therefore the decision level) is only determined once the window is at an end.

One example has been provided of how to calculate the number of bits to transmit in a transmission window, based on knowledge of the fluctuation of the current waveform over time and the known modulation depth used to create the valleys and peaks.

In another approach, the number of bits and in turn the length of the transmission window may be based on pre-stored window locations in each cycle of the current waveform. These set window positions are then based on the known general fluctuation of the current. This is a static approach to the setting of the transmission window timings. For example, given the standard mains input, the ripple current to the LED is detected in a test procedure, and respective window with proper length is designed by fitting the windows into the ripple current with the criteria of maximizing the overall data throughput.

In yet another approach, the processor is adapted to determine the number of bits and in turn the length of the transmission window according to a real-time detected value of the current waveform at a particular instant and the decision current. As mentioned above, this decision current may be fixed as the average current at the start of the window, or this decision current may itself update over time, being based on the average value within the transmission window up to a particular point in time. In this way, the window size is determined dynamically. When the decision current (whether fixed or tracking the current signal during the window) is to be exceeded by (or within a guard band of) a modulation of any current with the negative offset within that window, or the decision current is greater than (or within a guard band of) a modulation of the any current with the positive offset within that window, the transmission window needs to end, because the use of the decision current as a threshold is no longer suitable for that window.

This invention can be used for any LED of other solid state lighting application that requires visible light communication, or coded light applications such as for indoor positioning services. It may be used for lighting system commissioning, and other location and content services such as advertising, and content pushing to mobile devices with a coded light receiver.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope

**Claims**

1. An electronic circuit for modulating information onto a current waveform which is for driving a light emitting element (40), said current waveform varying over time before any modulation is applied, the circuit comprising:

   a first unit (50) for providing to the current waveform a first current signal indicating a start of a transmission window (30), and a second current signal indicating an end of said transmission window (30); and
   a modulator (52) for modulating data onto the current waveform during the transmission window, by sequentially adding an offset to the current waveform to create a peak value (1+) and/or subtracting an offset from the current waveform to create a valley value (I-),
   wherein said modulator (52) is adapted to set the offset such that each peak value during said transmission window exceeds an average current ($I_{SET}$) in the transmission window and each valley value during said transmission window is below the average current.

2. A circuit as claimed in claim 1, wherein the first and second current signals comprise signals with a different frequency to a modulation frequency or a pulse with a different duration to a pulse duration of the modulation data.

3. A circuit as claimed in claim 1, wherein the first current signal is further adapted to indicate the end of a previous window, and the second current signal is further adapted to indicate the start of a next window.

4. A circuit as claimed in any preceding claim, further comprising a processor (54) for determining a number of bits of information to be modulated onto the current waveform during the transmission window (30).

5. A circuit as claimed in claim 4, wherein said processor (54) is adapted to:

   determine the number of bits and in turn the length of the transmission window according to a pre-stored window location in each cycle of the current waveform; or
   determine the number of bits and in turn the length of the transmission window according to the variation rate of the current waveform per bit and the size of the offset; or
   determine the number of bits and in turn the length of the transmission window according to a real-time detected value of the current waveform at a particular instant and the average current.

6. A circuit as claimed in claim 4, wherein said processor (54) is adapted to:
   determine the end of the transmission window if a real-time detected value of the current waveform at any particular instant within said window plus or minus the offset has reached the average current.

7. A circuit as claimed in any preceding claim comprising a modulation resistor (48) for connection in series with the light emitting element (40), and a shorting switch (46) in parallel with the modulation resistor for selectively shorting the modulation resistor thereby modulating the current waveform.

8. A lighting unit for emitting light modulated with data, comprising:

   a light emitting element (40) comprising one or more LEDs; and
   a circuit as claimed in any preceding claim for modulating data onto an LED drive current based on a coded light input signal, thereby providing a coded light output.

9. An LED driver comprising
   a single stage LED driver architecture; and
   a circuit as claimed in any one of claims 1 to 7 for modulating data onto the LED drive current thereby providing a coded light output.

**10.** A lighting system comprising:

a light emitting element comprising one or more LEDs;
a single stage LED driver; and
a circuit as claimed in any one of claims 1 to 7 for modulating data onto the LED drive current thereby providing a coded light output.

**11.** An electronic circuit for receiving data modulated onto a coded light signal, comprising:

a light receiving element (70) for converting a light input into a current signal having a waveform which varies over time;
a detecting circuit (72) for detecting a first current signal indicating a start of a transmission window, and a second current signal indicating an end of said transmission window; and
a demodulator (74) for detecting data modulated onto the current waveform during the transmission window, said demodulator (74) is adapted to:

detecting an instant value of the current waveform;
calculating an average value of the current waveform in the transmission window; and
determining a peak value if the instant value is larger than the average value and determining a valley value if the instant value is smaller than the average value,
determining the data according to the determined peak values and valley values.

**12.** A circuit as claimed in claim 11, wherein the first and second current signals comprise signals with a different frequency to a modulation frequency or a pulse with a different duration to a pulse duration of the modulation data.

**13.** A method of modulating information onto a current waveform which is for driving a light emitting element (40), said current waveform varying over time before any modulation is applied, the method comprising:

providing to the current waveform a first current signal indicating a start of a transmission window (30), and a second current signal indicating an end of said transmission window (30); and
modulating data onto the current waveform during the transmission window (30), by sequentially adding an offset to the current waveform to create a peak value or subtracting an offset from the current waveform to create a valley value,
wherein said step of modulation comprising setting the offet such that each peak value during said transmission window exceeds an average current ($I_{SET}$) in the transmission window and each valley value during said transmission window is below the average current.

**14.** A method as claimed in claim 13, comprising generating the first and second current signals by providing a different frequency to a modulation frequency, or by providing a pulse with a different duration to a pulse duration of the modulation data.

**15.** A method for receiving data modulated onto a coded light signal, comprising:

converting a light input into a current signal having a waveform which varies over time;
detecting a first current signal indicating a start of a transmission window, and a second current signal indicating an end of said transmission window; and
detecting data modulated onto the current waveform during the transmission window, comprising:

detecting an instant value of the current waveform;
calculating an average value of the current waveform in the transmission window; and
determining a peak value if the instant value is larger than the average value and determining a valley value if the instant value is smaller than the average value,
determining the data according to the determined peak values and valley values.

**Patentansprüche**

**1.** Elektronische Schaltung, um einer Stromwellenform, die zur Ansteuerung eines lichtemittierenden Elements (40) dient, Informationen aufzumodulieren, wobei die Stromwellenform im Zeitablauf variiert, bevor eine Modulation angewendet wird, wobei die Schaltung umfasst:

eine erste Einheit (50), um der Stromwellenform ein erstes Stromsignal, das einen Anfang eines Übertragungsfensters (30) anzeigt, sowie ein zweites Stromsignal, das ein Ende dieses Übertragungsfensters (30) anzeigt, zuzuführen; sowie

einen Modulator (52), um der Stromwellenform während des Übertragungsfensters Daten aufzumodulieren, indem er zu der Stromwellenform einen Offset sequentiell hinzufügt, um einen Maximalwert (I+) zu erzeugen, und/oder von der Stromwellenform einen Offset abzieht, um einen Minimalwert (I-) zu erzeugen,

wobei der Modulator (52) so eingerichtet ist, dass er den Offset so festlegt, dass jeder Maximalwert während des Übertragungsfensters einen Durchschnittsstrom ($I_{SET}$) in dem Übertragungsfenster überschreitet, und jeder Minimalwert während des Übertragungsfensters unterhalb des Durchschnittsstromes liegt.

2. Schaltung nach Anspruch 1, wobei das erste und zweite Stromsignal Signale mit einer anderen Frequenz als einer Modulationsfrequenz oder einen Impuls mit einer anderen Dauer als einer Impulsdauer der Modulationsdaten umfassen.

3. Schaltung nach Anspruch 1, wobei das erste Stromsignal weiterhin dafür geeignet ist, das Ende eines vorhergehenden Fensters anzuzeigen, und wobei das zweite Stromsignal weiterhin dafür geeignet ist, den Anfang eines nächsten Fensters anzuzeigen.

4. Schaltung nach einem der vorangegangenen Ansprüche, weiterhin umfassend einen Prozessor (54), um eine Anzahl von Bits von Informationen zu ermitteln, die der Stromwellenform während des Übertragungsfensters (30) aufzumodulieren sind.

5. Schaltung nach Anspruch 4, wobei der Prozessor (54) so eingerichtet ist, dass er:

die Anzahl von Bits und in Folge die Länge des Übertragungsfensters entsprechend einer vorgespeicherten Fensterposition in jedem Zyklus der Stromwellenform ermittelt; oder

die Anzahl von Bits und in Folge die Länge des Übertragungsfensters entsprechend der Variationsrate der Stromwellenform pro Bit und der Größe des Offsets ermittelt; oder

die Anzahl von Bits und in Folge die Länge des Übertragungsfensters entsprechend einem detektierten Echtzeitwert der Stromwellenform zu einem bestimmten Zeitpunkt und dem Durchschnittsstrom ermittelt.

6. Schaltung nach Anspruch 4, wobei der Prozessor (54) so eingerichtet ist, dass er:
das Ende des Übertragungsfensters ermittelt, wenn ein detektierter Echtzeitwert der Stromwellenform zu einem bestimmten Zeitpunkt innerhalb des Fensters plus oder minus des Offsets den Durchschnittsstrom erreicht hat.

7. Schaltung nach einem der vorangegangenen Ansprüche, umfassend einen Modulationswiderstand (48) zur Reihenschaltung mit dem lichtemittierenden Element (40) sowie einen Kurzschlussschalter (46) parallel zu dem Modulationswiderstand, um den Modulationswiderstand selektiv kurzzuschließen und dadurch die Stromwellenform zu modulieren.

8. Beleuchtungseinheit, um mit Daten moduliertes Licht zu emittieren, umfassend:

ein lichtemittierendes Element (40) mit einer oder mehreren LEDs; sowie

eine Schaltung nach einem der vorangegangenen Ansprüche, um aufgrund eines codierten Lichteingangssignals einem LED-Ansteuerungsstrom Daten aufzumodulieren, um dadurch einen codierten Lichtstrom bereitzustellen.

9. LED-Treiber, umfassend:

eine einstufige LED-Treiberarchitektur; sowie

eine Schaltung nach einem der Ansprüche 1 bis 7, um dem LED-Ansteuerungsstrom Daten aufzumodulieren und dadurch einen codierten Lichtstrom bereitzustellen.

10. Beleuchtungssystem, umfassend:

ein lichtemittierendes Element mit einer oder mehreren LEDs;

einen einstufigen LED-Treiber; sowie

eine Schaltung nach einem der Ansprüche 1 bis 7, um dem LED-Ansteuerungsstrom Daten aufzumodulieren und dadurch einen codierten Lichtstrom bereitzustellen.

11. Elektronische Schaltung, um einem codierten Lichtsignal aufmodulierte Daten zu empfangen, umfassend:

ein Lichtempfangselement (70), um einen Lichtinput in ein Stromsignal umzuwandeln, das eine Wellenform aufweist, die im Zeitablauf variiert;

eine Detektionsschaltung (72), um ein erstes Stromsignal, das einen Anfang eines Übertragungsfensters anzeigt, sowie ein zweites Stromsignal, das ein Ende des Übertragungsfensters anzeigt, zu detektieren; sowie

einen Demodulator (74), um der Stromwellenform während des Übertragungsfensters aufmodulierte Daten zu detektieren, wobei der Demodulator (74) so eingerichtet ist, dass er:

einen Momentanwert der Stromwellenform detektiert;

einen Durchschnittswert der Stromwellenform in dem Übertragungsfenster berechnet; und

einen Maximalwert ermittelt, wenn der Momentanwert größer als der Durchschnittswert ist, und einen Minimalwert ermittelt, wenn der Momentanwert geringer als der Durchschnittswert ist,

die Daten entsprechend dem ermittelten Maximalwert und Minimalwert ermittelt.

12. Schaltung nach Anspruch 11, wobei das erste und zweite Stromsignal Signale mit einer anderen Frequenz als einer Modulationsfrequenz oder einen Impuls mit einer anderen Dauer als einer Impulsdauer der Modulationsdaten umfassen.

13. Verfahren, um einer Stromwellenform, die zur Ansteuerung eines lichtemittierenden Elements (40) dient, Informationen aufzumodulieren, wobei die Stromwellenform im Zeitablauf variiert, bevor eine Modulation angewendet wird, wobei gemäß dem Verfahren:

der Stromwellenform ein erstes Stromsignal, das einen Anfang eines Übertragungsfensters (30) anzeigt, sowie ein zweites Stromsignal, das ein Ende dieses Übertragungsfensters (30) anzeigt, zugeführt wird; und

der Stromwellenform während des Übertragungsfensters (30) Daten aufmoduliert werden, indem zu der Stromwellenform ein Offset sequentiell hinzugefügt wird, um einen Maximalwert zu erzeugen, und/oder von der Stromwellenform ein Offset abgezogen wird, um einen Minimalwert zu erzeugen,

wobei der Modulationsschritt das Festlegen des Offsets so erfolgt, dass jeder Maximalwert während des Übertragungsfensters einen Durchschnittsstrom ($I_{SET}$) in dem Übertragungsfenster überschreitet und jeder Minimalwert während des Übertragungsfensters unterhalb des Durchschnittsstromes liegt.

14. Verfahren nach Anspruch 13, wonach das erste und zweite Stromsignal durch Vorsehen einer anderen Frequenz als einer Modulationsfrequenz oder durch Vorsehen eines Impulses mit einer anderen Dauer als einer Impulsdauer der Modulationsdaten erzeugt werden.

15. Verfahren zum Empfang von einem codierten Lichtsignal aufmodulierten Daten, wonach:

ein Lichtinput in ein Stromsignal umgewandelt wird, das eine Wellenform aufweist, die im Zeitablauf variiert;

ein erstes Stromsignal, das einen Anfang eines Übertragungsfensters anzeigt, sowie ein zweites Stromsignal, das ein Ende des Übertragungsfensters anzeigt, detektiert wird; und

der Stromwellenform während des Übertragungsfensters aufmodulierte Daten detektiert werden, wobei:

ein Momentanwert der Stromwellenform detektiert wird;

ein Durchschnittswert der Stromwellenform in dem Übertragungsfenster berechnet wird; und

ein Maximalwert ermittelt wird, wenn der Momentanwert größer als der Durchschnittswert ist, und ein Minimalwert ermittelt wird, wenn der Momentanwert geringer als der Durchschnittswert ist,

die Daten entsprechend dem ermittelten Maximalwert und Minimalwert ermittelt werden.

**Revendications**

1. Circuit électronique pour moduler des informations sur une forme d'onde de courant qui sert à entraîner un élément électroluminescent (40), ladite forme d'onde de courant variant avec le temps avant l'application de toute modulation, le circuit comprenant :

une première unité (50) pour fournir à la forme d'onde de courant un premier signal de courant indiquant un début d'une fenêtre de transmission (30), et un second signal de courant indiquant une fin de ladite fenêtre de transmission (30) ; et

un modulateur (52) pour moduler des données sur la forme d'onde de courant durant la fenêtre de transmission, en ajoutant séquentiellement un décalage à la forme d'onde de courant afin de créer une valeur de crête (I+) et/ou soustrayant un décalage de la forme d'onde de courant afin de créer une valeur de vallée (I-),

dans lequel ledit modulateur (52) est adapté pour régler le décalage de telle sorte que chaque valeur de crête durant ladite fenêtre de transmission dépasse un courant moyen ($I_{SET}$) dans la fenêtre de transmission et chaque valeur de vallée durant ladite fenêtre de transmission est sous le courant moyen.

2.  Circuit selon la revendication 1, dans lequel les premier et second signaux de courant comprennent des signaux ayant une fréquence différente d'une fréquence de modulation ou une impulsion ayant une durée différente d'une durée d'impulsion des données de modulation.

3.  Circuit selon la revendication 1, dans lequel le premier signal de courant est en outre adapté pour indiquer la fin d'une fenêtre précédente, et le second signal de courant est en outre adapté pour indiquer le débit d'une fenêtre suivante.

4.  Circuit selon une quelconque revendication précédente, comprenant en outre un processeur (54) pour déterminer un nombre de bits d'informations à moduler sur la forme d'onde de courant durant la fenêtre de transmission (30).

5.  Circuit selon la revendication 4, dans lequel ledit processeur (54) est adapté pour :

déterminer le nombre de bits et donc la longueur de la fenêtre de transmission en fonction d'un emplacement de fenêtre pré-stocké dans chaque cycle de la forme d'onde de courant ; ou
déterminer le nombre de bits et donc la longueur de la fenêtre de transmission en fonction de la vitesse de variation de la forme d'onde de courant par bit et de la taille du décalage ; ou
déterminer le nombre de bits et donc la longueur de la fenêtre de transmission en fonction d'une valeur détectée en temps réel de la forme d'onde de courant à un instant particulier et du courant moyen.

6.  Circuit selon la revendication 4, dans lequel ledit processeur (54) est adapté pour :
déterminer la fin de la fenêtre de transmission si une valeur détectée en temps réel de la forme d'onde de courant à tout instant particulier dans ladite fenêtre plus ou moins le décalage a atteint le courant moyen.

7.  Circuit selon une quelconque revendication précédente comprenant en outre une résistance de modulation (48) pour connexion en série à l'élément électroluminescent (40), et un commutateur de court-circuit (46) en parallèle à la résistance de modulation pour court-circuiter sélectivement la résistance de modulation modulant ainsi la forme d'onde de courant.

8.  Unité d'éclairage pour émettre de la lumière modulée avec des données, comprenant :

un élément électroluminescent (40) comprenant une ou plusieurs DEL ; et
un circuit selon une quelconque revendication précédente pour moduler des données sur un courant d'entraînement de DEL sur la base d'un signal d'entrée à lumière codée, fournissant ainsi une sortie de lumière codée.

9.  Pilote de DEL comprenant
une architecture de pilote de DEL à étage unique ; et
un circuit selon l'une quelconque des revendications 1 à 7 pour moduler des données sur le courant d'entraînement de DEL fournissant ainsi une sortie de lumière codée.

10. Système d'éclairage comprenant :

un élément électroluminescent comprenant une ou plusieurs DEL;
un pilote de DEL à étage unique ; et
un circuit selon l'une quelconque des revendications 1 à 7 pour moduler des données sur le courant d'entraînement de DEL fournissant ainsi une sortie de lumière codée.

11. Circuit électronique pour recevoir des données modulées sur un signal de lumière codée, comprenant :

un élément de réception de lumière (70) pour convertir une entrée de lumière en un signal de courant ayant une forme d'onde qui varie avec le temps ;
un circuit de détection (72) pour détecter un premier signal de courant indiquant un début d'une fenêtre de transmission, et un second signal de courant indiquant une fin de ladite fenêtre de transmission ; et
un démodulateur (74) pour détecter des données modulées sur la forme d'onde de courant durant la fenêtre de transmission, ledit démodulateur (74) est adapté pour :

détecter une valeur instantanée de la forme d'onde de courant ;
calculer une valeur moyenne de la forme d'onde de courant dans la fenêtre de transmission ; et
déterminer une valeur de crête si la valeur instantanée est supérieure à la valeur moyenne et déterminer une valeur de vallée si la valeur instantanée est inférieure à la valeur moyenne,
déterminer les données en fonction des valeurs de crête et valeurs de vallée déterminées.

12. Circuit selon la revendication 11, dans lequel les premier et second signaux de courant comprennent des signaux ayant une fréquence différente d'une fréquence de modulation ou une impulsion ayant une durée différente d'une durée d'impulsion des données de modulation.

13. Procédé de modulation d'informations sur une forme d'onde de courant qui sert à entraîner un élément électroluminescent (40), ladite forme d'onde de courant variant avec le temps avant l'application de toute modulation, le procédé comprenant :

la fourniture à la forme d'onde de courant d'un premier signal de courant indiquant un début d'une fenêtre de transmission (30), et d'un second signal de courant indiquant une fin de ladite fenêtre de transmission (30) ; et
la modulation de données sur la forme d'onde de courant durant la fenêtre de transmission (30), en ajoutant séquentiellement un décalage à la forme d'onde de courant afin de créer une valeur de crête ou en soustrayant un décalage de la forme d'onde de courant afin de créer une valeur de vallée,
dans lequel ladite étape de modulation comprend le réglage du décalage de telle sorte que chaque valeur de crête durant ladite fenêtre de transmission dépasse un courant moyen ($I_{SET}$) dans la fenêtre de transmission et chaque valeur de vallée durant ladite fenêtre de transmission est sous le courant moyen.

14. Procédé selon la revendication 13, comprenant la génération des premier et second signaux de courant en fournissant une fréquence différente d'une fréquence de modulation, ou en fournissant une impulsion ayant une durée différente d'une durée d'impulsion des données de modulation.

15. Procédé de réception de données modulées sur un signal de lumière codée, comprenant :

la conversion d'une entrée de lumière en un signal de courant ayant une forme d'onde qui varie avec le temps ;
la détection d'un premier signal de courant indiquant un début d'une fenêtre de transmission, et d'un second signal de courant indiquant une fin de ladite fenêtre de transmission ; et
la détection de données modulées sur la forme d'onde de courant durant la fenêtre de transmission, comprenant :

la détection d'une valeur instantanée de la forme d'onde de courant ;
le calcul d'une valeur moyenne de la forme d'onde de courant dans la fenêtre de transmission ; et
la détermination d'une valeur de crête si la valeur instantanée est supérieure à la valeur moyenne et la détermination d'une valeur de vallée si la valeur instantanée est inférieure à la valeur moyenne,
la détermination des données en fonction des valeurs de crête et valeurs de vallée déterminées.

FIG. 1

FIG. 2a

FIG. 2b

FIG. 3

FIG. 4

FIG. 5

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130016965 A1

- US 20150016825 A